Europäisches Patentamt

European Patent Office

Office européen des brevets

(11) Publication number: **0 635 803 A2**

# EUROPEAN PATENT APPLICATION

(21) Application number: **94109395.7**

(22) Date of filing: **17.06.94**

(51) Int. Cl.6: **G06T 7/00**

(30) Priority: **18.06.93 JP 172544/93**

(43) Date of publication of application:
**25.01.95 Bulletin 95/04**

(84) Designated Contracting States:
**DE FR IT NL**

(71) Applicant: **OMRON CORPORATION**
**10, Tsuchido-cho**
**Hanazono**
**Ukyo-ku**
**Kyoto 616 (JP)**

(72) Inventor: **Ijiri, Takashi, 628-2 Sugiya-cho**
**Sakaimachidoori-Nijousagaru,**
**Nakagyou-ku**
**Kyoto-city,**
**Kyoto (JP)**

(74) Representative: **Kahler, Kurt, Dipl.-Ing.**
**Patentanwälte Kahler, Käck, Fiener & Sturm**
**P.O. Box 12 49**
**D-87712 Mindelheim (DE)**

(54) **A method and an apparatus for image processing.**

(57) A method and an apparatus for image processing in which certain processes are carried out by sorting plural labeled images (A1 - A8) and specifying any one or plural of the sorted labeled images. Respective labeled images are divided into groups by their positional relations (for example, the positional relations in the direction of Y axis). And respective labeled images belonging to each group are sorted within the group by the respective positions (for example, X coordinates of the centers of gravity ($g_1$ - $g_8$)).

F I G. 2

Field of the Invention

The present invention relates to a method for image processing and an apparatus thereof, which sorts a plurality of labeled images and carries out certain processes by specifying any labeled images which are sorted. More particularly, the present invention relates to a method and an apparatus for sorting plural labeled images which are labeled differently so as to specify exactly aimed labeled images.

Prior Art

When plural objects are included in the visual field of a TV camera, the image obtained by taking a picture image is subjected to binarization and converted to a binary image, and the binary image is subjected to the labelling process to extract and label the image areas of the respective objects. Furthermore, the respective image areas extracted by labelling, that is, the labeled images are sorted by feature parameters of the respective images such as areas or the coordinates on centers of gravity, and a specified labeled image is designated to carry out a process for recognition.

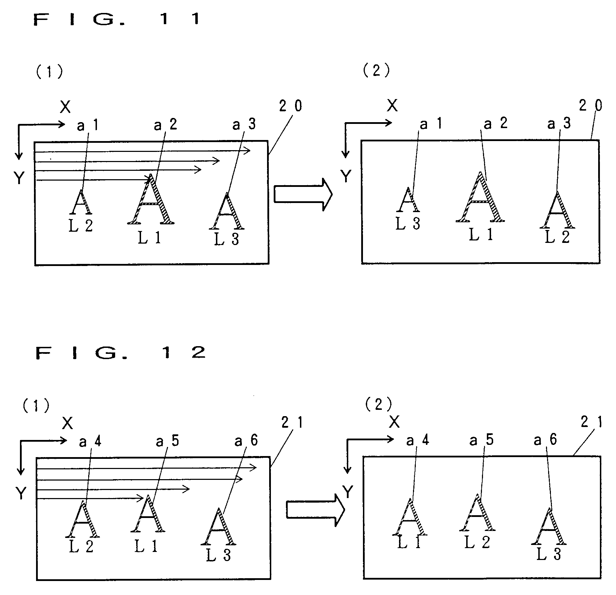

Fig. 11 (1) and (2) show one embodiment of sorting by areas conventionally.

Fig. 11 (1) shows an image 20 obtained by taking a picture image of the characters, and three of the same character "A" having different areas are in a row. The image 20 of these characters is raster-scanned as shown by arrows in the drawing to extract labeled image a1, a2 and a3 of the characters. The respective labeled images a1, a2 and a3 are labeled in the order of extraction. In the embodiment shown in the drawing, the character in the center having the largest area are labeled L1, the character on the left having the smallest area is labeled L2, and the character on the right having a middle-sized area is labeled L3.

After this labelling process, the feature parameters of labeled images a1 - a3 are measured and stored in predetermined storage areas in RAM. At this time, the feature parameter of the labeled image a2 which is labeled L1, is stored to the storage area relating to label L1 in RAM, the feature parameter of the labeled image a1 which is labeled L2, is stored to the storage area relating to label L2, and the feature parameter of the labeled image a3 which is labeled L3, is stored in the storage area relating to label L3, in sequence.

Next, these labeled images a1, a2 and a3 are sorted by areas. The sorting mentioned here means a rearranging of the data in RAM so that the feature parameters of the labeled image a2 having the largest area, the feature parameters of the labeled image a3 having the second largest area, and the feature parameters of the labeled image a1 having the smallest area are stored in the storage areas relating to labels L1, L2, and L3 respectively. In other word, it means a modification of the labels allotted to respective labeled images a1 - a3, and Fig. 11 (2) shows the relations between labeled images a1 - a3 and the labels L1 - L3 after the sorting.

By this sorting, if "the labeled image having the largest area" is designated, the central labeled image a2 is specified, and the feature parameters of the labeled image a2 are read out from the storage area relating to the label L1.

Fig. 12 (1) and (2) show one embodiment of sorting by X coordinates on the centers of gravity conventionally.

Fig. 12 (1) shows an image 21 obtained by taking a picture image of characters, and in the image three of the same character "A" having almost the same size are in a row. The image 21 of these characters is raster-scanned as shown by arrows in the drawing to extract labeled images a4, a5 and a6 of the characters. The labeled images a4, a5 and a6 are labeled in the order of extraction. In the embodiment shown in the drawing, the character in the center is labeled L1, the character on the left is labeled L2, and the character on the right is labeled L3.

After this labelling, the feature parameters of respective labeled images a4 - a6 are measured, and are stored in a predetermined storage areas in RAM in the same manner as described above. At this time, the feature parameter of the labeled image a5 which is labeled L1, is stored in the storage area relating to label L1, the feature parameter of the labeled image a4 which is labeled L2, is stored in the storage area relating to label L2, and the feature parameter of the labeled image a6 which is labeled L3, is stored in the storage area relating to label L3, in sequence.

In the illustrated example, the respective labeled images a4, a5 and a6 are sorted by X coordinates on the centers of gravity. The sorting mentioned here means a rearranging of the data in RAM so that the feature parameters of the labeled image a4 having the smallest X coordinate, the labeled image a5 having the second smallest X coordinate, and the labeled image a6 having the largest X coordinate are stored in the storage areas in RAM relating to labels L1, L2, and L3 respectively. Fig. 12 (2) shows the relations between respective labeled images a4 - a6 and the labels L1 - L3 after the sorting.

By this sorting, if "the labeled image having the smallest X coordinate" is designated, the labeled image a4 on the left end is specified, and the feature parameter of the labeled image a4 is read out from the storage area relating to the label L1.

Furthermore, when an object is compared with a predetermined model to judge whether the object is good or not, it is necessary to allocate respective labeled images in the image obtained by taking a picture image of the object to labeled images in the model image in sequence, and to compare corresponding feature parameters. In this case, after labelling and calculation with regard to the model image of the feature parameters, respective labeled images are sorted by areas or coordinates on the centers of gravity in the same manner as described above, and the data in RAM are rearranged in a certain order. Next, the image of the object of the examination is taken, and labelling and calculation of the feature parameter are carried out, then sorting is performed in the same manner as in the model image.

By the above-mentioned process, each labeled image in the image of examination, is allotted the same label as the corresponding labeled image in the model image. So it is judged whether the object is good or not by reading out the feature parameters of the labeled images which are labeled the same from the RAM and comparing their parameters.

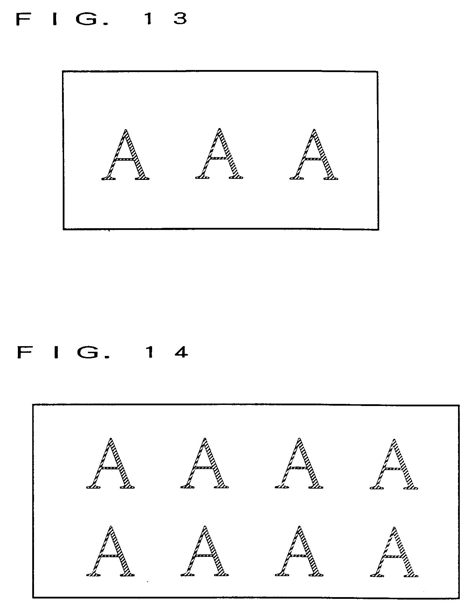

In the case of the sorting by areas, when the areas of the labeled image ate clearly different from each other as shown in Fig. 11, rearrangement can be easily carried out and the labeled images can be correctly specified. However, when the areas of a plural labeled images are the same value as shown in Fig. 13, they cannot be compared by areas, and the sorting by areas becomes difficult.

Furthermore, in the case of the sorting by coordinates on centers of gravity, when respective labeled images are located on one row or one column as shown in Fig. 12, rearrangement can be easily carried out by using the X coordinates or the Y coordinates on the centers of gravity. However, when the labeled images are located on plural columns and plural rows as shown in Fig. 14, the positions of the X coordinates or Y coordinates on centers of gravity are superposed between a plural labeled images, and the sorting by coordinates becomes difficult.

Furthermore, when each labeled image is compared with the corresponding labeled image of the model image to carry out the examination, if any object lacks a piece or is distorted and the area or the center of gravity of the labeled image is changed, the results obtained by sorting in the image of examination would be different from those obtained by sorting in the model images, and it may be unable to allocate the labeled images.

Summary of the Invention

It is an object of the present invention to be able to sort the labeled images regardless of their conditions such as positions, areas and so on, and to specify objectives for procedure exactly.

To achieve the above object, the present invention provides a method for image processing, in which labeled images which are labeled differently are sorted, said method being carried out by the steps of dividing the respective labeled images into groups according to their positional relations, and sorting respective labeled images belonging to each group by their positions within the group.

By the above sorting, respective labeled images which are labeled differently are divided into groups according to their positional relations, and respective labeled images belonging to each group are sorted by respective positions. So even if plural labeled images have the same area, or are located in plural columns and plural rows, it is possible to sort respective images in a certain order according to the groups and the arrangement order of labeled images within each group, to specify the objectives exactly, and to perform a proper measurement.

Also even if any object of examination lacks a piece or is distorted, the sorting results obtained in the images of the objects are the same as those of the model images. So both respective labeled images can be allocated correctly to obtain the accurate examination results.

In one preferred embodiment, said step of dividing the labeled images into groups comprises dividing the respective labeled images which are labeled differently into groups according to their positional relations in the vertical direction, and said step of sorting the labeled images belonging to each group comprises sorting respective labeled images belonging to each group by the positions of the labeled images in the horizontal direction. According to this method, respective labeled images are divided into groups according to the positional relations in the direction of Y axis, and images in each group are sorted. So objects such as characters and figures which continue in the horizontal direction can be processed in sequence.

Furthermore, on the contrary, said step of dividing the labeled images into groups may comprise dividing the respective labeled images which are labeled differently into groups according to their positional relations in the horizontal direction, and said step of sorting the labeled images belonging to each group may comprise sorting respective labeled images belonging to each group by the positions of the labeled images in the vertical direction. According to this method, respective labeled images are divided into groups according to their positional relations in the direction of X axis, and labeled images belonging to each group are sorted. So objects such as characters and figures which continue in the vertical direction can be processed in sequence.

According to one aspect of an apparatus to perform the image processing method described above, there is provided one which comprises measuring means for measuring positions in the image of the respective labeled images which are labeled differently, judging means for discriminating the positional relations between respective labeled images whose positions have been measured by said measuring means, grouping means for dividing the labeled images into groups according to the positional relations between the labeled images discriminated by the judging means, and sorting means for sorting respective labeled images belonging to each group by positions of the labeled images measured by the measuring means.

Said measuring means, preferably, measures the positions in the image of the respective labeled images which are labeled differently according to the coordinates in the centers of gravity of the labeled images, therefore the positions of labeled images can be obtained simply.

Said judging means, preferably, comprises means for sorting the respective labeled images which are labeled differently by the positions of the labeled images measured by the measuring means, means for setting up areas circumscribing the respective labeled images in the order of the sorting and measuring the positions at the corresponding end portions of each circumscribed area, and means for judging the positional relations between the respective labeled images by comparing the positions at the respective end portions of the circumscribed areas. According to this structure, respective labeled images are sorted by measured positions, and the circumscribed area is set up for respective labeled images in the order of sorting, to discriminate the relative positional relations of respective labeled images according to the positions at the corresponding end portions of the respective circumscribed areas. So grouping of labeled images can be easily and correctly carried out.

Furthermore, according to another embodiment of the present invention, there is proposed an image processing apparatus which comprises noise removing means for excluding labeled images whose areas are smaller than a predetermined value as noise, among the respective labeled images, measuring means for measuring positions in the image of remaining labeled images whose areas are larger than the predetermined value, judging means for discriminating the relative positional relations between the remaining labeled images whose positions have been measures by said measuring means, grouping means for dividing the remaining labeled images into groups according to the relative positional relations discriminated by the judging means, and sorting means for sorting respective labeled images belonging to each group by the positions of the labeled images measured by the measuring means. According to this structure, since labeled images whose areas are smaller than the predetermined value are removed as a noise, among respective labeled images, the objectives of sorting can be narrowed and fast processing speed is obtained.

Brief Description of the Drawings

Fig. 1 is a block diagram showing the structure of an image processing apparatus according to one embodiment of the present invention,

Fig. 2 is a view showing the image in which plural labeled images are extracted,

Fig. 3 is a view showing an example of the data stored in a feature parameter storage table after labelling,

Fig. 4 is a view showing a method for calculating the feature parameter of a labeled image,

Fig. 5 is a view showing an example of the data in group data storage table in RAM,

Fig. 6 is a flow chart showing the control procedure by CPU,

Fig. 7 is a view showing concretely a method of checking groups,

Fig. 8 is a view showing an example of data stored in the feature parameter storage table after the sorting process,

Fig. 9 is a view showing a image of an object having a cylindrical shape in which a plural labeled images are extracted,

Fig. 10 is a view showing a method of setting up the circumscribed area to a labeled image,

Figs. 11 and 12 are views showing the conventional sorting method,

Figs. 13 and 14 are views showing the problems of the conventional sorting process.

Best Mode for Carrying Out the Invention

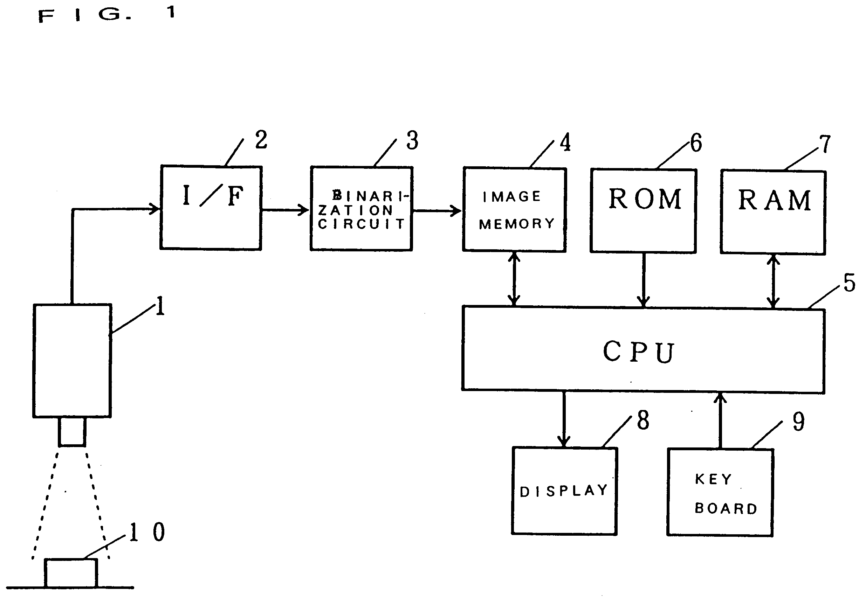

Fig. 1 shows a structure of an image processing apparatus according to one embodiment of the present invention.

In the drawing, numeral 1 represents a TV camera which is positioned to take a picture image of the object 10 from the upper direction, and the picture signals of this TV camera is sent to a binarization circuit 3 through an interface circuit 2 including an A/D converting circuit therein. The binarization circuit 3 converts the picture signals to binary signals based on a predetermined threshold, and outputs binary image data to the image memory 4.

Said object 10 in this embodiment has plural characters or figures in plural columns and plural rows printed on its surface, and the image processing apparatus examines if there is any indistinct or uneven portion with regard to specific character or figure located on predetermined column and a predetermined row.

Of course, the image processing apparatus of the present invention can be used for recognition or examination of objects other than printed patterns.

CPU 5 which is the main control body of this apparatus, is connected to said image memory 4, ROM 6, RAM 7 as well as a display 8 such as CRT and a keyboard 9.

Said RAM 7 includes storage areas for storing various data such as a feature parameter storage table and a group data storage table which will be described later, and the data stored in RAM 7 are accessed by CPU 5 as necessary. CPU 5 reads out data from RAM 7 and writes data to RAM 7 based on the programs stored in ROM 6, extracts image areas of printed patterns in the image data stored in the image memory 4 to label the image ares, and sorts respective labeled images in a certain order, and judges whether the object is good or not according to the feature parameters of respective labeled images or some specific labeled images.

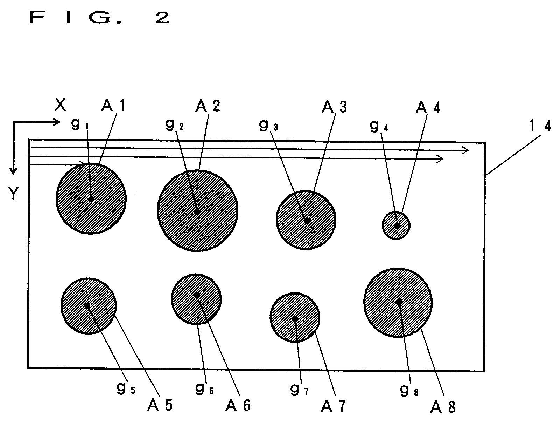

Fig. 2 shows an example of labelling in an image obtained by taking a picture image of said object 10. In the drawing, to explain easily, labeled images A1 - A8 are shown, which are obtained by taking a picture image of circular printed patterns arranged in 4 columns and 2 rows.

Incidentally, in the drawing, $g_1$ - $g_8$ represent the centers of gravity of respective labeled images A1 - A8.

Said CPU 5 scans the image 14 in the direction shown by arrows in the drawing, segments the image area of respective printed matters to extract the labeled images A1 - A8, extracts the data relating to the length in the horizontal direction (run length) of respective labeled images A1 - A8 as feature parameters, and stores the feature parameters in RAM 7.

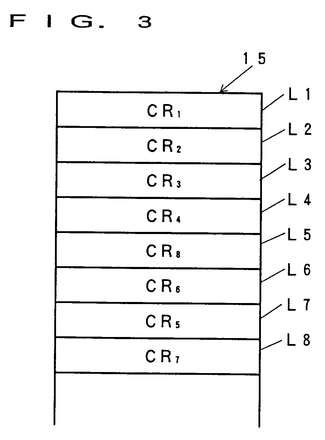

Fig. 3 shows a feature parameter storage table provided in RAM 7 for storing the feature parameters of the extracted respective labeled images A1 - A8.

In the drawing, L1 - L8 represent individual areas in the feature parameter storage table 15, and $CR_1$ - $CR_8$ represent the feature parameters of the labeled images A1 - A8, respectively.

The feature parameters $CR_1$ - $CR_8$ mean groups of plural data relating to run lengths extracted in the respective labeled images A1 - A8. Concretely speaking, the data of each run length is represented by encoding the positions at the end points of respective images.

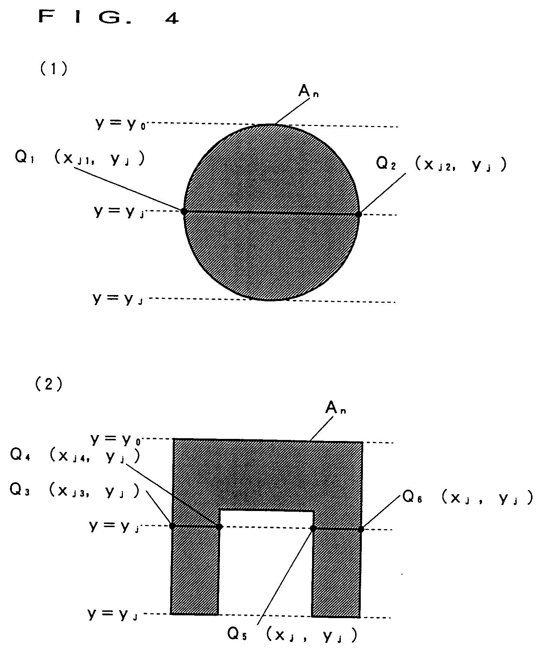

Fig. 4 (1) and (2) show an example of extraction of run lengths of labeled images. In the labeled image $A_n$ in Fig. 4 (1), two points of $Q_1$ and $Q_2$ are extracted as the end points of the image located on the axis of $y = y_j$, and after the X coordinates $X_{j1}$ and $X_{j2}$ of respective end points $Q_1$ and $Q_2$ are determined, coded data $(y_j, x_{j1}, x_{j2})$ which correspond to the Y coordinate $y_j$ with both x coordinates is set as data showing run length on the axis of $y = y_j$.

In the case of the labeled image $A_n$ in Fig. 4 (2), four end points, $Q_3$, $Q_4$, $Q_5$ and $Q_6$ are extracted on the axis of $y = y_j$, and coded data $(y_j, x_{j3}, x_{j4}, x_{j5}, x_{j6})$ which corresponds to $y_j$ with $x_{j3}$, $x_{j4}$, $x_{j5}$ and $x_{j6}$ is set as data showing the run length on the axis of $y = y_j$.

In each of the illustrated examples, coded data described above are extracted based on each axis from $y = y_0$ to $y = y_j$ which is the range for existence of the labeled image, and the data which integrates these respective coded data is set as the feature parameter $CR_n$ of the labeled image $A_n$, and stored in the feature parameter storage table 15. Incidentally, each data such as area, the peripheral length, and the position of the center of gravity of the labeled image $A_n$, is properly calculated by this feature parameter $CR_n$.

Returning to Fig. 3, an area L1 is for storing data relating to the labeled image first extracted by the raster scanning among the image areas A1 - A8, and in the same manner the feature parameters of labeled images are stored in the areas L2 - L8 in the order of the labelling. In the illustrated example, it is shown that said respective labeled images are extracted in order of $A_1$, $A_2$, $A_3$, $A_4$ $A_8$, $A_8$, $A_8$, and $A_7$, and the feature parameters of the labeled images are stored in the order.

In this image processing apparatus, data in said feature parameter storage table 15 is sorted in ascending order of the Y coordinates of the centers of gravity of respective labeled images, and rectangles circumscribing the respective labeled images are set up, and the positional relations of respective labeled images are extracted from the Y coordinates on the upper edges and the lower edges of the respective rectangles to divide the data into groups. Furthermore, the data in each group is sorted within the group in ascending order of the X coordinates of the center of gravity.

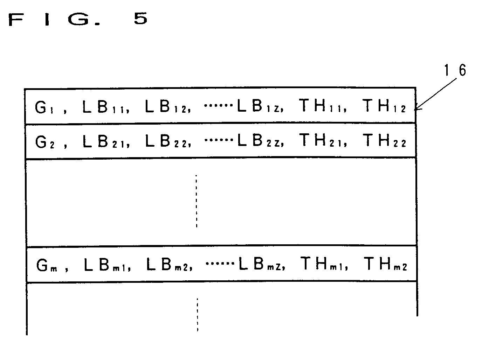

Fig. 5 shows an example of setting the group data storage table 16 in RAM 7.

In the drawing, $G_m$ (m = 1, 2, 3 ...) is an identification code of the group, and $LB_{m1}$ - $LB_m$ represent addresses in the feature parameter storage table 15 (the addresses correspond to L1, L2, ... in the above Fig. 3) which store the feature parameters of the labeled images which are determined to belong to the group $G_m$. Furthermore, $TH_{m1}$ and $TH_{m2}$ represent the maximum value and the minimum value respectively, both are set as an index for grouping, as be described later.

In this embodiment, first the image data obtained by taking a picture image of a good object is subjected to the labelling process, the feature parameters of respective labeled images are sorted by the above method, and stored in certain areas in RAM 7. Then, the image data of the objects of examination is taken in sequence, and the obtained images are subjected to the labelling and the sorting in the same manner described above, and the feature parameters of respective labeled images or some specific labeled images are compared with the corresponding stored parameters of the model image to judge whether the objects are good or not.

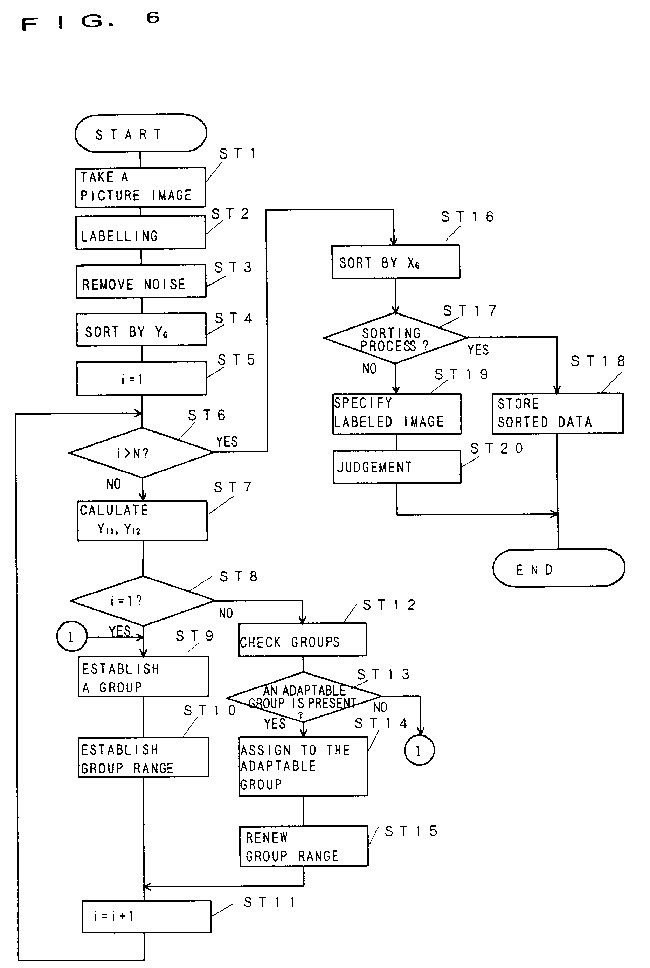

Fig. 6 shows a control procedure from taking a picture image to examination which are carried out by said CPU 5 according to the program, at step 1 (shown by "ST1" in the drawing) to step 20.

At the step 1, CPU 5 activates TV camera 1 to take a picture image of an object 10. The picture signals output from the TV camera 1 are converted to digital signals, and further converted to the binary signals in the binarization circuit 3, and then the binary image data are stored in the image memory 4.

Then, CPU 5 subjects the binary image data stored in the image memory 4 to labelling to extract image areas of respective printed patterns. After the labelling process, CPU 5 extracts said run lengths data of respective labeled images in the order of labels, and stores the data in said feature parameter storage table 15 in RAM 7 (step 2).

At the next step 3, CPU 5 checks the areas of the respective labeled images A1 - A8. If the areas of any label images are below the predetermined value, CPU 5 determines the labeled images to be equivalent to noise, deletes the data of the labeled images in said feature parameter storage table 15 so that it is excluded from objectives of the following procedures and renews the memory by advancing the data in the subsequent areas in sequence.

Then, CPU 5 compares the Y coordinates $Y_G$ of the centers of gravity of the labeled images A1 - A8, and sorts the respective data of the feature parameter storage table 15 in ascending order of $Y_G$ (step 4).

At the next step 5, CPU 5 initialize a variable i, and at the next step 6, it judges if the value of the variable i exceeds the number N (in this case, N = 8) of the labeled images or not. In the first stage of the procedure, this judgement is "NO". So at the next step 7, CPU 5 sets up a rectangle which circumscribes the labeled image whose Y coordinate $Y_G$ of center of gravity is the smallest (at this time, the data of the labeled image is stored in the area L1 of said feature parameter storage table 15) and calculates the Y coordinates $Y_{i1}$, and $Y_{i2}$ of the upper edge and the lower edge of the circumscribed rectangle.

Then, CPU 5 judges whether the value of said variable i is an initialized value or not (step 8). Since the judgement at step 8 is "YES" at first, CPU 5 proceeds to step 9, to establishes the first group $G_1$ for the labeled image. And CPU 5 establishes the maximum value $TH_{i1}$, and the minimum value $TH_{i2}$ to said coordinates $Y_{i1}$ and $Y_{i2}$ respectively, as the range of the Y coordinate, in order to extract the labeled images which are assigned to the first group (step 10).

Then, at step 11, CPU 5 adds 1 to the variable i to return to step 6, and judges whether the value of the variable i exceeds the number N of the labeled images A1 - A8. At present, i. e. after the first increment, this judgement becomes "NO", and CPU 5 sets a rectangle which circumscribes the labeled image whose Y coordinate of the center of gravity is second smallest (the labeled image whose data is stored in the area L2 of said feature parameter storage table 15) to calculate the Y coordinates on the upper edge and the lower edge, $Y_{i1}$, and $Y_{i2}$ of the rectangle.

Since the value of the variable i becomes "2" as the result of the first increment, the judgement at the next step 8 is "NO", and CPU 5 proceeds to step 12 to check whether the Y coordinates $Y_{i1}$ and $Y_{i2}$ on the upper edge and the lower edge of the rectangle circumscribing the second labeled image is included in the range of the Y coordinate of the first group $G_1$.

When the relations between the Y coordinates $Y_{i1}$, $Y_{i2}$ on the upper and lower edges of the rectangle circumscribing the second labeled image, and said maximum and the minimum value $TH_{11}$, $TH_{12}$ satisfy either condition of $TH_{12} \leq Y_{i1} \leq TH_{11}$, or $TH_{12} \leq Y_{i2} \leq TH_{11}$, the second labeled image is determined to belong the first group.

Fig. 7 shows the group checking method concretely.

In Fig. 7, if numeral 11 is designated as the rectangle circumscribing the first labeled image, and numeral 12 is designated as the rectangle circumscribing the second labeled image, the Y coordinate $Y_{i1}$ on the upper edge of the second circumscribed rectangle 12 is in the range of the Y coordinate of the first group, that is, between the maximum value $TH_{11}$ and the minimum value $TH_{12}$. Therefore, the second labeled image is determined to be included in the first group $G_1$.

As the result, the judgement at the step 13 becomes "YES", and at the next step 14, the second labeled image is assigned to the group $G_1$ (step 14).

Then, at the step 15, CPU 5 compares the Y coordinates on the upper edge and the lower edge of the circumscribed rectangle with the maximum value $TH_{11}$ and the minimum value $TH_{12}$, respectively, to renew the range of the group $G_1$.

Namely, when the Y coordinate $Y_{i1}$ on the upper edge of the circumscribed rectangle is larger than the maximum value $TH_{11}$, the maximum value $TH_{11}$ is renewed by $Y_{i1}$, and when the Y coordinate $Y_{i2}$ on the lower edge of the circumscribed rectangle is smaller than the minimum value $TH_{12}$, the minimum value $TH_{12}$ is renewed by $Y_{i2}$. On the other hand, in the case of $TH_{11} \geq Y_{11} > Y_{12} \geq TH_{12}$, the maximum value $TH_{11}$ and the minimum value $TH_{12}$ are maintained.

In the example of Fig. 7, since $Y_{i1}$ is smaller than the maximum value $TH_{11}$, and $Y_{i2}$ is smaller than the minimum value $TH_{12}$, in this case, the minimum value $TH_{12}$ is renewed by $Y_{i2}$ to enlarge the range of the group.

If, it is judged that an adaptable group is not present, CPU 5 proceeds to step 9 to establish a new group.

When the same procedure has been performed for all labeled images, in the example shown in Fig. 2, the eight labeled images A1 - A8 are divided into the group of the 1st row and the group of the 2nd row.

When this grouping has been completed, the judgement at step 6 becomes "YES", and CPU 5 proceeds to step 16 to extract the respective labeled images belonging to the first group $G_1$ by referring to said group data storage area 16, and to sort the data of the labeled images of the group in ascending order of the X values $X_G$ of the centers of gravity. Then, the data of the respective labeled images belonging to the second group $G_2$, are sorted in the same manner in ascending order of the X coordinate $X_G$ of the centers of gravity.

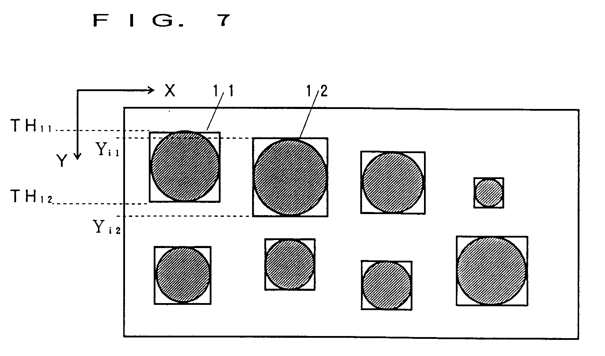

Fig. 8 shows the data stored in the feature parameter storage area 15 after the sorting has been completed. The feature parameters $CR_1$ - $CR_4$ of the labeled images A1 - A4 on the first row are stored in the areas L1 - L4 respectively, and the feature parameters $CR_5$ - $CR_8$ of the labeled images A5 - A8 on the second row are stored in the areas L5 - L8, respectively, in ascending order of the X coordinates of the centers of gravity.

Returning to Fig. 6, when the above processes are carried out for the image of a good model, the judgement at step 17 becomes "YES", and CPU 5 stores the feature parameters of respective labeled images in the stored order in certain storage areas in RAM 7 (step 18).

On the other hand, when the procedure is carried out for the image of an object, the judgement at step 17 becomes "NO", and CPU 5 specifies respective labeled images in sequence or specifies one or plural specific labeled images, based on a set up condition (step 19).

For example, if CPU 5 specifies the second labeled image on the second row at step 19, the labeled image A6 in Fig. 2 will be identified. Then, CPU 5 calculates area of the labeled image A6 from the data in RAM 7 (the data in area L6 of the feature parameter storage table 15), and compares the area with the stored data, that is, the area of the labeled image stored sixthly relating to the model image, and judge whether any indistinct or uneven portion is present or not (step 20).

Incidentally, the judging at step 20 may be carried out by pattern matching. In this case, it is possible to recognize or examine at high accuracy by positioning the standard pattern obtained from the stored data of the model image in the center of gravity of said labeled image A6.

The sorting is not only in ascending order, but also in descending order. Furthermore, on the contrary to the above method, the data of respective labeled images may be divided into groups based on the X coordinates at first, and labeled images in each group may be sorted based on the Y coordinates.

In the above example, the Y coordinates of the corresponding two edges of the rectangle circumscribing the labeled images are used as parameters for grouping. But it is possible to provide other modification. For example, the data of respective labeled images may be divided into groups by checking whether the X coordinate or the Y coordinate of center of gravity is in a certain range or not.

Furthermore, in the above embodiment, grouping and sorting are carried out by means of the X and Y coordinates, but sorting may be carried out by means of, for example, the polar coordinates.

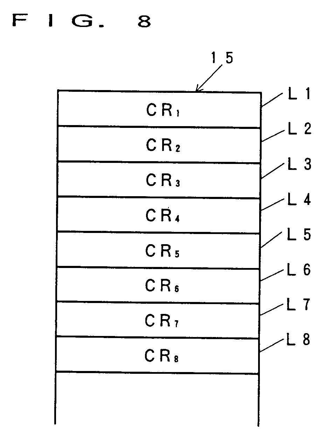

Fig. 9 shows an example of labelling in an image obtained by taking a picture image of a cylindrical object from the upper direction.

On the upper surface of this object, plural patterns are printed along the peripheral edge, and the labeled images B1 - B9 of these printed patterns are extracted by labelling.

In addition, $G_0$ in the drawing represents the center of gravity of the object, and P represents a reference point for extracting the angles of respective labeled images B1 - B9 to $G_0$.

In the case of this embodiment, just as in the first embodiment, after labelling respective labeled images B1 - B9 in a certain order, the run lengths are extracted as the feature parameter of each labeled image, and stored in the feature parameter storage table 15 in RAM 7.

In the illustrated example, sorting corresponding to the step 4 in said Fig. 6 is carried out in respect of angles $\theta$ between the respective lines L which go through the centers of gravity g of respective labeled images and said $G_0$, and the line M (which goes through said reference point P and $G_0$). CPU 5 first determines these angles $\theta$ for respective labeled images B1 - B11 in sequence, sorts the data of respective labeled images in ascending order of angle $\theta$, and sets up areas which circumscribe respective labeled images.

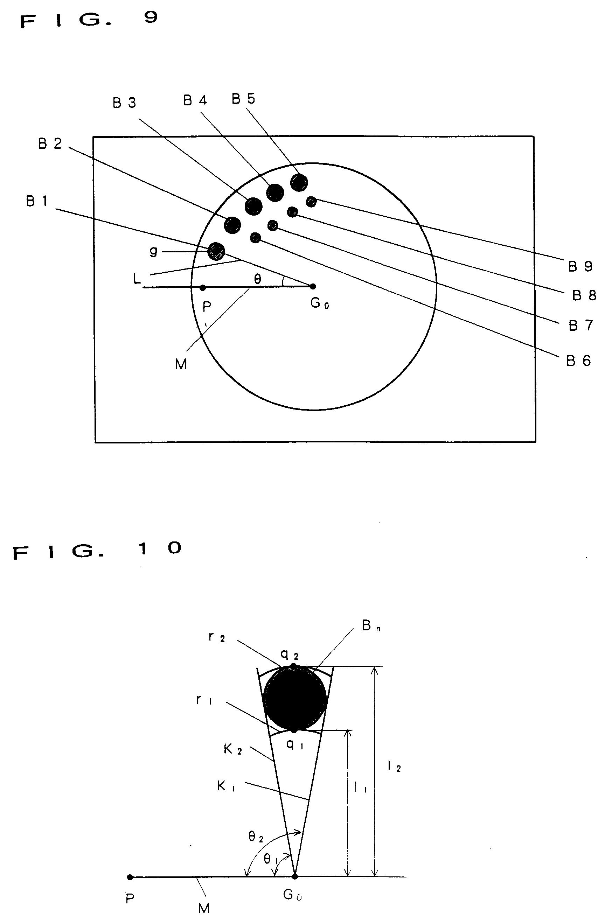

Fig. 10 shows an example in which a circumscribed area is set up for the labeled image $B_n$.

This circumscribed area is comprised of tangents $k_1$ and $k_2$, which go through said $G_0$ and circumscribe the labeled image $B_n$, and the circumscribed arcs $r_1$ and $r_2$ which circumscribe the labeled image at the nearest point $q_1$ and at the farthest point $q_2$ from $G_0$ respectively.

In addition, these arcs, $r_1$ and $r_2$, are determined by the distance $l_1$ $l_2$ between each point $q_1$, $q_2$ and $G_0$, and the angles $\theta_1$, $\theta_2$ of said respective tangents $k_1$, $k_2$ to said line M.

CPU 5 sets up the circumscribed area for respective labeled images in the order of sorting, and divides respective labeled images into groups by the distance $l_1$ $l_2$ between the arcs $r_1$, $r_2$ and the center of gravity $G_0$, After this grouping is completed, CPU 5 sorts respective labeled images within each group by said angles $\theta_1$, $\theta_2$, in the order of grouping.

## Claims

1. A method for image processing in which certain processes are carried out by sorting plural labeled images which are labeled differently in image data and specifying any one or plural of the sorted labeled images,
   **characterized** in
   that said sorting process comprises the steps of
   dividing said respective labeled images into groups according to their positional relations, and
   sorting respective labeled images belonging to each group by their positions within the group.

2. A method for image processing as defined in claim 1, wherein said step of dividing the labeled images into groups comprises dividing said respective labeled images which are labeled differently into groups according to their positional relations in the vertical direction, and said step of sorting the labeled images belonging to each group comprises sorting respective labeled images belonging to each group by the positions of the labeled images in the horizontal direction.

3. A method for image processing as defined in claim 1, wherein said step of dividing the labeled images into groups comprises dividing said respective labeled images which are labeled differently into groups according to their positional relations in the horizontal direction, and said step of sorting the labeled images belonging to each group comprises sorting respective labeled images belonging to each group by the positions of the labeled images in the vertical direction.

4. An apparatus for image processing which carries out certain processes by sorting plural labeled images which are labeled differently in image data and specifying any one or plural of the sorted labeled images, comprising:
   measuring means for measuring positions in the image of said respective labeled images,
   judging means for discriminating the positional relations between respective labeled images whose positions have been measured by said measuring means,
   grouping means for dividing said labeled images into groups according to said positional relations between the labeled images discriminated by said judging means, and
   sorting means for sorting respective labeled images belonging to each group by positions of the labeled images measured by said measuring means.

5. An apparatus for image processing as defined in claim 4,
   wherein said measuring means measures the positions in the image of said respective labeled images which are labeled differently according to the coordinates of the centers of gravity of the labeled images.

6. An apparatus for image processing as defined in claim 4 or 5,
   wherein said judging means comprises means for sorting said respective labeled images which are labeled differently by the positions of the labeled images measured by said measuring means, means for setting up areas circumscribing said respective labeled images in the order of said sorting and measuring the positions at the corresponding end portions of each circumscribed area, and means for judging the positional relations between respective labeled images by comparing the positions at the respective end portions of said circumscribed areas.

7. An apparatus for image processing which carries out certain processes by sorting plural labeled images which are labeled differently in image data and specifying any one or plural of sorted labeled images, comprising:

noise removing means for excluding labeled images whose areas are smaller than a predetermined value as noise, among said respective labeled images,

measuring means for measuring positions in the image of remaining labeled images whose areas are larger than said predetermined value,

judging means for discriminating the positional relations between said remaining labeled images whose positions have been measured by said measuring means,

grouping means for dividing said remaining labeled images into groups according to said positional relations discriminated by said judging means, and

sorting means for sorting respective labeled images belonging to each group by the positions of the labeled images measured by said measuring means.

F I G. 1

EP 0 635 803 A2

# F I G. 2

F I G. 3

15

| CR$_1$ | L 1 |
| CR$_2$ | L 2 |
| CR$_3$ | L 3 |
| CR$_4$ | L 4 |
| CR$_8$ | L 5 |
| CR$_6$ | L 6 |
| CR$_5$ | L 7 |
| CR$_7$ | L 8 |

# F I G. 4

(1)

$A_n$

$y = y_0$

$Q_1 \ (x_{j1}, \ y_j)$ $\qquad\qquad Q_2 \ (x_{j2}, \ y_j)$

$y = y_j$

$y = y_J$

(2)

$A_n$

$y = y_0$

$Q_4 \ (x_{j4}, \ y_j)$

$Q_3 \ (x_{j3}, \ y_j)$ $\qquad\qquad Q_6 \ (x_j, \ y_j)$

$y = y_j$

$y = y_J$

$Q_5 \ (x_j, \ y_j)$

FIG. 5

16

| | |
|---|---|
| $G_1$, $LB_{11}$, $LB_{12}$, ······$LB_{1z}$, $TH_{11}$, $TH_{12}$ | |
| $G_2$, $LB_{21}$, $LB_{22}$, ······$LB_{2z}$, $TH_{21}$, $TH_{22}$ | |
| | |
| $G_m$, $LB_{m1}$, $LB_{m2}$, ······$LB_{mz}$, $TH_{m1}$, $TH_{m2}$ | |
| | |

# F I G. 6

F I G. 7

# F I G. 8

15

| | |
|---|---|
| CR₁ | L1 |
| CR₂ | L2 |
| CR₃ | L3 |
| CR₄ | L4 |
| CR₅ | L5 |
| CR₆ | L6 |
| CR₇ | L7 |
| CR₈ | L8 |

# F I G. 9

# F I G. 1 0

18

F I G.  1 1

(1)

(2)

F I G.  1 2

(1)

(2)

F I G. 1 3

F I G. 1 4